# EUROPÄISCHE PATENTSCHRIFT

(11) **EP 2 359 308 B1**
(45) Veröffentlichungstag und Bekanntmachung des Hinweises auf die Patenterteilung: **25.07.2018**
(21) Anmeldenummer: 09755853.0
(22) Anmeldetag: 19.10.2009
(51) Int. Cl.: G06K 9/00

(54) **VORRICHTUNG ZUR ERZEUGUNG UND/ODER VERARBEITUNG EINER OBJEKTSIGNATUR, ÜBERWACHUNGSVORRICHTUNG, VERFAHREN UND COMPUTERPROGRAMM**
DEVICE FOR CREATING AND/OR PROCESSING AN OBJECT SIGNATURE, MONITORING DEVICE, METHOD AND COMPUTER PROGRAM
DISPOSITIF DE PRODUCTION ET/OU DE TRAITEMENT D'UNE SIGNATURE D'OBJET, DISPOSITIF DE CONTRÔLE, PROCÉDÉ ET PRODUIT-PROGRAMME

(30) Priorität: 21.11.2008 DE 102008043953
(43) Veröffentlichungstag der Anmeldung: 24.08.2011
(73) Patentinhaber: Robert Bosch GmbH, 70442 Stuttgart (DE)
(72) Erfinder: LOOS, Hartmut, 31141 Hildesheim (DE); WARZELHAN, Jan Karl, 31135 Hildesheim (DE)
(86) Internationale Anmeldenummer: PCT/EP2009/063666
(87) Internationale Veröffentlichungsnummer: WO 2010/057732

(56) Entgegenhaltungen:
- SERGIO VELASTIN & PAOLO REMAGNINO: "Intelligent Distributed Video Surveillance Systems" INTELLIGENT DISTRIBUTED SURVEILLANCE SYSTEMS, IEE, LONDON, GB, 1. Januar 2006 (2006-01-01), Seiten 1-30, XP008081222
- THEODORIDIS S ET AL: "Pattern Recognition, PASSAGE" 1. Januar 1999 (1999-01-01), PATTERN RECOGNITION, SAN DIEGO, CA : ACADEMIC PRESS, US, PAGE(S) 403-441,484-486 , XP002575794 ISBN: 9780126861402 Seite 404 - Seiten 406, 420 Seite 426 - Seite 428 Seite 484 - Seite 486
- ANTANI S ET AL: "A survey on the use of pattern recognition methods for abstraction, indexing and retrieval of images and video" PATTERN RECOGNITION, ELSEVIER, GB, Bd. 35, Nr. 4, 1. April 2002 (2002-04-01), Seiten 945-965, XP004329464 ISSN: 0031-3203
- CLEMENS ARTH ET AL: "Object Reacquisition and Tracking in Large-Scale Smart Camera Networks", DISTRIBUTED SMART CAMERAS, 2007. ICDSC '07. FIRST ACM/IEEE INTERN ATIONAL CONFERENCE ON, IEEE, PI, 1 September 2007 (2007-09-01), pages 156-163, XP031151277, ISBN: 978-1-4244-1353-9
- BASHARAT A ET AL: "Content based video matching using spatiotemporal volumes", COMPUTER VISION AND IMAGE UNDERSTANDING, ACADEMIC PRESS, US, vol. 110, no. 3, 1 June 2008 (2008-06-01), pages 360-377, XP022652945, ISSN: 1077-3142, DOI: 10.1016/J.CVIU.2007.09.016 [retrieved on 2008-02-06]

## Beschreibung

### Stand der Technik

Die Erfindung betrifft eine Vorrichtung zur Erzeugung und/oder Verarbeitung einer Objektsignatur eines Objekts aus einer Szene, wobei die Objektsignatur zur Beschreibung und/oder Identifikation des Objektes ausgebildet ist, mit einer Merkmalsextraktionseinrichtung, welche ausgebildet ist, aus der Szene mindestens einen Merkmalswert des Objektes zu extrahieren, wobei der Merkmalswert in einem Merkmalsraum des Merkmals darstellbar ist, und mit einer Codierungseinrichtung, welche ausgebildet ist, den Merkmalswert in eine Identifikationsdatum zu kodieren, wobei das Identifikationsdatum einen Teil der Objektsignatur bildet. Die Erfindung betrifft im Weiteren eine Überwachungsvorrichtung, ein Verfahren sowie ein diesbezügliches Computerprogramm.

Videoüberwachungssysteme in bekannten Ausführungsformen weisen eine Mehrzahl von Überwachungskameras auf, die auch komplexe Überwachungsbereiche beobachten. Die Bilddatenströme aus den Überwachungsbereichen werden bei manchen Ausführungsformen zusammengeführt und zentral ausgewertet. Neben einer Auswertung durch Überwachungspersonal hat sich mittlerweile eine automatisierte Überwachung etabliert, wobei Bildverarbeitungsalgorithmen eingesetzt werden. Ein übliches Vorgehen ist hierbei, bewegte Objekte vom (im Wesentlichen statischen) Szenenhintergrund zu trennen, über die Zeit zu verfolgen und bei relevanten Bewegungen Alarm auszulösen oder weiter zu verfolgen.

Erstreckt sich der Überwachungsbereich weiträumiger, ist es auch üblich, die bewegten Objekte nicht nur im Sichtfeld einer einzigen Kamera, sondern über das gesamte Kameranetzwerk in dem Überwachungsbereich und über einen größeren Zeitraum zu verfolgen. Hierbei stellt sich das Problem der Wiedererkennung der bewegten Objekte an verschiedenen Orten und zu verschiedenen Zeitpunkten. Denn oftmals sind die Sichtfelder der Kameras nicht überlappend, so dass ein bewegtes Objekt das Sichtfeld einer Kamera verlässt und zu einem unbestimmten, späteren Zeitpunkt in das Sichtfeld einer anderen Kamera eintritt. Um eine Wiedererkennung zu ermöglichen, werden von den bewegten Objekten möglichst viele Informationen beim Auftreten der Objekte gesammelt. Diese Sammlung von Informationen wird Objektsignatur genannt. Mittels der Objektsignatur ist es nun möglich, die Objekte im Kameranetzwerk wieder zu erkennen.

Der wissenschaftliche Artikel von Sergio Velastin & Paolo Remagnino, "Intelligent Distributed Video Surveillance Systems", IEE, London, GB, 1. Januar 2006 (2006-01-01), Seiten 1-30, behandelt grundsätzlich den Netzwerkaufbau von verteilten Videoüberwachungssystemen und stellt verschiedene Verfahren zur Detektion und Wiedererkennung von bewegten Objekten vor.

Der wissenschaftliche Artikel von Theodoridis S et al, "Pattern Recognition, Passage", 1. Januar 1999 (1999-01-01), San Diego, CA: Academic Press, US, Page(s) 403-441, 484-486- XÜ002575794, ISBN: 9780126861402, macht allgemeine Ausführungen über Merkmalsräume, Cluster-Algorithmen und Ähnlichkeitsmaße.

Beispielsweise offenbart die Druckschrift DE 10 2005 053 148 A1 ein Verfahren zur Handhabung von Inhaltsinformationen bei einem Videoüberwachungssystem. Es ist vorgesehen, in einem Netzwerk Inhaltsinformationen einzelner Objekte bereitzustellen und über das Netzwerk zu verteilen. Die Inhaltsinformationen werden in verschiedenen Hierarchieebenen gesammelt, wobei die verschiedenen Hierarchieebenen unabhängig voneinander gelesen werden können. Es wird zusätzlich vorgeschlagen, die Inhaltsinformationen zu kodieren, um Inhaltsinformationen aus unteren Hierarchieebenen in höheren Hierarchieebenen zu Übersichtsinformationen zu verdichten, so dass diese

Übersichtsinformationen der höheren Hierarchieebenen bei einer Suche nach relevanten Ereignissen vorteilhaft genutzt werden können, um eine Sichtung von Bildarchiven aus Videodaten auf kurze, relevante Zeiträume einzuschränken.

Die wissenschaftliche Publikation von Arslan Basharat et al. "Content based video matching using spatiotemporal volumes" (Computer Vision and Image Unterstanding, Academic Press, US, Bd. 110, Nr. 3, 1. Juni 2008 (2008-06-01), Seiten 360-377, XP022652945, ISSN: 1077-31-42, DOI: 10.1016/J.CVIU.2007.09.016) beschreibt ein Framework für das Matching von Videosequenzen mit Hilfe der raum-zeitlichen Segmentierung des Videos. Es werden Interest-Point-Trajektorien verwendet, um Videovolumina zu generieren. Die Interest-Point-Trajektorien, die mit dem SIFT-Operator erzeugt werden, werden zu Bewegungssegmenten gebündelt, indem ihre Bewegungs- und Raumeigenschaften analysiert werden. Die zeitliche Übereinstimmung zwischen den geschätzten Bewegungssegmenten wird dann anhand der gängigsten SIFT-Korrespondenzen ermittelt. Ein Zwei-Pass-Korrespondenz-Algorithmus wird verwendet, um das Aufteilen und Zusammenführen von Regionen zu handhaben. Die räumlich-zeitlichen Volumina werden mit Hilfe der konsequent verfolgten Bewegungssegmente extrahiert. Als nächstes werden eine Reihe von Funktionen wie Farbe, Textur, Bewegung und SIFT-Deskriptoren extrahiert, um ein Volumen darzustellen. Für den Vergleich von Volumenmerkmalen wird ein auf Earth Mover's Distance (EMD) basierender Ansatz verwendet.

In dem Artikel von Clemens Arth et al. "Object Reacquisition and Tracking in Large-Scale Smart Camera Networks" (Distributed Smart Cameras, 2007. ICDSC'07. First ACM/IEEE International Conference on, IEEE, PI, 1. September 2007 (2007-09-01), Seiten 156-163, XP031151277, ISBN: 978-1-4244-1353-9), der den nächstkommenden Stand der Technik bildet, ist eine merkmalbasierte Objekterkennung beschrieben, die auf autonomen Smartkameras ausgeführt wird und insbesondere auf Verkehrssituationen angewendet wird. Der vorgestellte Ansatz basiert auf PCA-SIFT-Features und einem Vocabulary-Tree. Indem einzigartige Objekt-Signaturen aus visuellen Merkmalen erstellen werden, wird die Wiederidentifizierung effizient und gleichzeitig wird der Kommunikationsaufwand zwischen den einzelnen Kameraknoten reduziert.

### Offenbarung der Erfindung

Es wird eine Vorrichtung zur Erzeugung und/oder Verarbeitung einer Objektsignatur mit den Merkmalen des Anspruchs 1, eine Überwachungsvorrichtung mit den Merkmalen des Anspruches 5, ein Verfahren mit den Merkmalen des Anspruches 6 sowie ein Computerprogramm mit den Merkmalen des Anspruches 7 offenbart. Bevorzugte oder vorteilhafte Ausführungsformen der Erfindung ergeben sich aus den Unteransprüchen, der nachfolgenden Beschreibung sowie den beigefügten Figuren.

Die Erfindung betrifft eine Vorrichtung, welche zur Erzeugung und/oder Verarbeitung, insbesondere für einen Vergleich, einer Objektsignatur eines Objekts aus einer Szene geeignet und/oder ausgebildet ist. Das Objekt ist vorzugsweise als ein bewegtes Objekt, wie zum Beispiel eine Person, ein Auto oder dergleichen, ausgebildet. Unter der Szene wird ein Ausschnitt eines Überwachungsbereiches verstanden, welcher mit Sensoren observiert wird bzw. observierbar ist. Die Sensoren sind vorzugsweise als Kameras ausgebildet, alternativ oder ergänzend können auch andere Sensoren, wie zum Beispiel Temperatursensoren, Geruchssensoren, Mikrofone etc. eingesetzt werden. Die Objektsignatur ist eine Datensammlung, welche zur Beschreibung und/oder Identifikation des Objekts, insbesondere im Rahmen einer Wiedererkennung oder eines Vergleichs, ausgebildet ist.

Die Vorrichtung umfasst eine Merkmalsextraktionseinrichtung, welche aus der Szene mindestens einen Merkmalswert des Objekts extrahieren kann, vorzugsweise werden mehrere Merkmalswerte extrahiert. Der Merkmalswert ist in einem Merkmalsraum des Merkmals darstellbar, wobei der Merkmalsraum durch eine Vielzahl von möglichen Merkmalswerten für das Merkmal gebildet wird. Jedes Merkmal kann somit in dem Merkmalsraum mehrere derartiger Merkmalswerte annehmen. Beispielsweise ist der Merkmalsraum als ein Farbhistogramm ausgebildet, durch Strukturmerkmale, SIFT-Merkmale, Geräusche, Gerüche etc. aufgespannt.

Ferner ist eine Kodierungseinrichtung vorgesehen, welche ausgebildet ist, den Merkmalswert in ein Identifikationsdatum, insbesondere in ein dimensionsloses Identifikationsdatum zu kodieren, wobei das Identifikationsdatum einen Teil der Objektsignatur bildet.

Im Rahmen der Erfindung wird vorgeschlagen, dass das Identifikationsdatum auf einen Cluster des Merkmalsraums des Merkmals verweist. Insbesondere ist das Identifikationsdatum für das Merkmal nicht unmittelbar beschreibend, sondern stellt einen transformierten oder abgebildeten Wert dar.

Im Gegensatz zu dem bekannten Stand der Technik wird der Merkmalswert nicht selbst in die Objektsignatur integriert. Stattdessen wird nur eine Referenz auf das Cluster in der Objektsignatur abgebildet, der den Merkmalswert umfasst. Diese Umsetzung hat den Vorteil, dass eine sehr effiziente und kompakte Beschreibung von Objekten gewährleistet ist. Statt der manchmal sehr komplexen Merkmalswerte, werden nur die Verweise - vergleichbar mit Pointern in der C-Syntax - auf die Cluster mit den Merkmalswerten weiter gegeben.

Bei einer bevorzugten Ausführungsform der Erfindung sind die Identifikationsdaten jeweils als ein Mehr-Bit-Wort ausgebildet. Je nach Komplexität des Merkmalsraums und Anzahl der darin zu berücksichtigenden Cluster wird als Objektdatum ein 8-bit-, 16-bit- oder 32-bit-Wort verwendet und somit die Speicher- bzw. Transferbedarf für das zugehörige Merkmal in der Objektsignatur auf diese Wortlänge begrenzt. Das Cluster ist bevorzugt so gewählt, dass es mehrere Merkmalswerte zusammenfasst. Insbesondere kann vorgesehen sein, dass Cluster eines Merkmalsraum unterschiedlich viele Merkmalswerte umfassen.

Es ist bevorzugt, wenn die Objektsignatur nicht nur ein Identifikationsdatum eines einzigen Merkmals umfasst, sondern eine Mehrzahl von Identifikationsdaten aufweist, welche verschiedenen Merkmalen zugeordnet sind. Die Art der Merkmale ist dabei nicht beschränkt, so kann es sich um Merkmale zur Beschreibung optischer Eigenschaften, wie zum Beispiel Farbe, Helligkeit, Textur etc, der Bewegung, wie zum Beispiel Geschwindigkeit oder Beschleunigung, und/oder akustischer Merkmale, wie zum Beispiel Trittgeräusche oder Gerüche etc. des Objekts handeln. Es ist prinzipiell auch möglich, elektromagnetische Strahlung, wie zum Beispiel Emissionsstrahlungen von Handys und dergleichen, als Merkmale in der Objektsignatur zu verwenden und über die Identifikationsdaten zu referenzieren.

Bei einer bevorzugten Umsetzung der Erfindung umfasst die Vorrichtung einen Teilbereichsgenerator, welcher zur Erzeugung des Merkmalsraums und/oder der Cluster in dem Merkmalsraum ausgebildet ist. Die Cluster können den Merkmalsraum vollständig abdecken, es ist jedoch bevorzugt, dass die Cluster voneinander beabstandet oder disjunkt in dem Merkmalsraum angeordnet sind. Die Erzeugung des Merkmalsraums und/oder der Cluster kann in einer Trainingsphase, zum Beispiel offline im Voraus, oder online während der Laufzeit der Vorrichtung erfolgen. Es wird vorzugsweise darauf geachtet, dass der zu jedem Merkmal dazugehörige Merkmalsraum sinnvoll in Cluster aufgeteilt wird. Eine sinnvolle Clusterung kann man beispielsweise erreichen, indem viele Testdaten (Objekte, die in einem Überwachungsnetzwerk vorkommen) aufgenommen werden, mittels dieser Testdaten den Merkmalsraum aufspannt und danach clustert. Je mehr Cluster im Merkmalsraum entstehen, desto feinere Unterschiede können von den Objekten extrahiert werden, aber auch um so teurer bzw. umfangreicher ist die Übertragung und/oder Verarbeitung von Objektsignaturen, da die für die Übertragung notwendige Wortlänge des Identifikationsdatums für den Merkmalsraum mit steigender Komplexität länger wird.

Bevorzugt ist die Kodierungseinrichtung ausgebildet, so dass ein Objekt das Identifikationsdatum von dem Cluster erhält, der am nächsten in dem Merkmalsraum zu dem Merkmalswert angeordnet ist. Der Merkmalsraum kann auch während der Laufzeit der Vorrichtung erweitert werden, indem neue Cluster definiert werden, wenn die Merkmalswerte zu den bisherigen Clustern einen zu großen Abstand haben.

Im Idealfall würde es ausreichen, nur die Identifikationsdaten der Objektsignaturen miteinander zu vergleichen, um gleiche Objekte zu erkennen bzw. zu identifizieren. Dies funktioniert, aber in der Regel nicht optimal, da die Merkmalswerte bei den gleichen Objekten stark aufgrund affinen Verzerrungen, Skalierungsänderungen, Beleuchtungsveränderungen, Lokalisierungsfehlern oder generell wegen Rauschen der Merkmalswerte variieren. Aus diesem Grund werden vermeintlich gleiche Merkmalswerte (dasselbe Merkmal wird auf demselben Objekt zu einem anderen Zeitpunkt berechnet) nicht dem gleichen Cluster zugewiesen, so dass sich die Identifikationsdaten dieses Merkmals unterscheiden.

Aufgrund dieser Schwierigkeit ist es erfindungsgemäß, dass der Teilraumgenerator zur Erzeugung eines Ähnlichkeitsmaßes zwischen den Clustern eines einzigen Merkmalsraums ausgebildet ist. Das Ähnlichkeitsmaß ist eine Bewertung der Ähnlichkeit zwischen zwei Clustern. Der Vorteil der Einführung eines Ähnlichkeitsmaßes liegt darin, dass das Ergebnis eines Vergleichs zwischen einem aktuellen Objekt und einem Referenz- oder Vergleichsobjekt nicht ausschließlich von der Identität der Objektsignaturen, sondern von der Ähnlichkeit der Objektsignaturen abhängig ist.

Erfindungsgemäß ist das Ähnlichkeitsmaß als ein Ähnlichkeitsgraph ausgebildet, wobei die Cluster als Knoten über Strecken verbunden sind. Die Ähnlichkeit von zwei Teilbereichen wird durch die Anzahl der Zwischenknoten zwischen zwei Clustern und beispielsweise über die Länge der dazwischen liegenden Strecken festgelegt, jeweils auf dem kürzesten Weg. Erfindungsgemäß umfasst die Vorrichtung eine Vergleichseinrichtung, welche zu einem Vergleich zwischen einer ersten Objektsignatur mit ersten Identifikationsdaten und einer zweiten Objektsignatur mit zweiten Identifikationsdaten auf Basis des Ähnlichkeitsmaßes ausgebildet ist. Bei dem Vergleich erfolgt insbesondere eine Fusion der Ähnlichkeitsfunktionen jedes Merkmals, so dass eine robuste Wiedererkennung von Objekten möglich ist. Es liegt dabei im Rahmen der Erfindung, dass die Merkmale jeweils gleichwertig behandelt werden, bei abgewandelten Ausführungsformen können die Merkmale auch gewichtet behandelt werden, so dass signifikantere Merkmale bei dem Vergleich stärker gewichtet werden als weniger signifikante Merkmale.
Ein weiterer Gegenstand der Erfindung betrifft eine Überwachungsvorrichtung, insbesondere ein Videoüberwachungssystem mit einer Mehrzahl von Überwachungskameras, welche zur Überwachung eines Überwachungsbereiches in einem Netzwerk angeordnet und/oder anordbar sind und welche mindestens eine Vorrichtung nach einem der vorhergehenden Ansprüche aufweist, wobei die Objektsignaturen über das Netzwerk übertragen werden. Bei dieser Ausprägung der Erfindung kommt der Vorteil der Minimierung der zu übertragenden Daten bei der erfindungsgemäßen Objektsignatur besonders deutlich zum tragen.

Damit an jedem beliebigen Ort in dem Netzwerk ein Vergleich von zwei Objektsignaturen durchgeführt werden kann, ist es bevorzugt, wenn in dem Netzwerk ein oder mehrere Datenspeicher vorgesehen sind, in denen die Merkmalsräume bzw. die Cluster und deren Abbildung auf die Identifikationsdaten und/oder das Ähnlichkeitsmaß hinterlegt sind. Bei einem Vergleich kann nach der Übertragung bzw. Generierung der Objektsignatur von jedem Punkt in dem Netzwerk auf den Datenspeicher zugegriffen werden und so die Ähnlichkeit zwischen zwei Objektsignaturen bestimmt werden.

Ein weiterer Gegenstand der Erfindung betrifft ein Verfahren zur Erzeugung und/oder Verarbeitung und/oder Suche bzw. Retrieval einer Objektsignatur mit den Merkmalen des Anspruches 7, welches auf einer Vorrichtung bzw. Überwachungsvorrichtung nach einem der vorhergehenden Ansprüche durchgeführt wird. Das vorgestellte Verfahren erlaubt es, effizient Objektsignaturen abzuspeichern, zu suchen und/oder zu vergleichen. Ein letzter Gegenstand der Erfindung betrifft ein Computerprogramm mit den Merkmalen des Anspruchs 8.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Figur 1: eine schematische Blockdarstellung einer Überwachungsvorrichtung als ein Ausführungsbeispiel der Erfindung;
- Figur 2: eine Illustration eines Merkmalsraums.

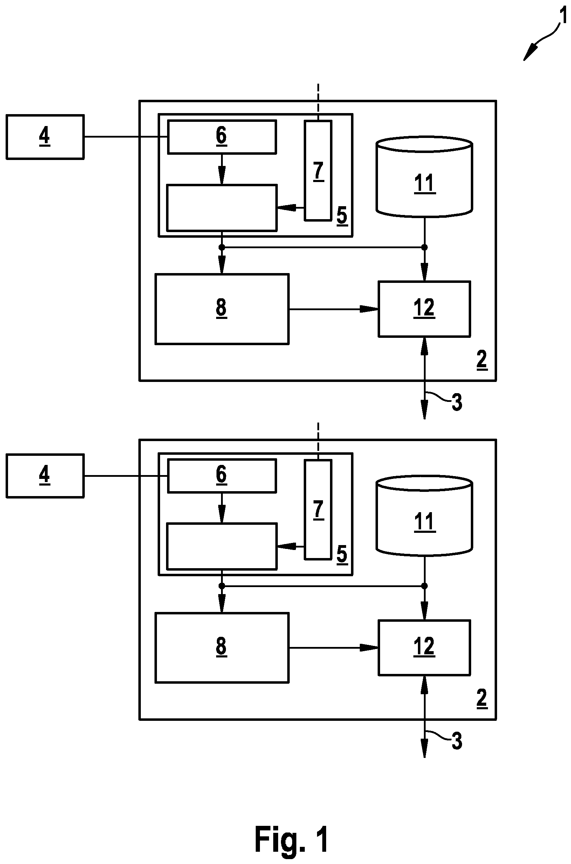

Die Figur 1 zeigt in einer schematischen Blockdarstellung ein Überwachungssystem 1, welches zur Überwachung eines komplexen Überwachungsbereichs, wie zum Beispiel Straßenzügen, Gebäuden, Fabrikhallen, Bibliotheken etc. geeignet und/oder ausgebildet ist. Das Überwachungssystem 1 umfasst eine Mehrzahl von Überwachungsvorrichtungen 2, welche über ein Netzwerk 3 miteinander vernetzt sind. Das Netzwerk 3 kann beliebig ausgebildet sein, z.B. kabellos oder kabelgebunden, als LAN, WLAN, Internet etc. Die Überwachungsvorrichtungen 2 weisen jeweils Sensoren 4 auf, welche einen Teil des Überwachungsbereichs als Szene erfassen. Beispielsweise sind die Sensoren 4 als Überwachungskameras ausgebildet. Besonders bevorzugt sind die Überwachungsvorrichtungen 2 mit den Sensor 4 als sogenannte Smartcameras ausgebildet, da die Erfindung die Verwendung von rechenleistungsschwachen Vorrichtungen unterstützt.

Eine Funktion des Überwachungssystems 1 ist es, bewegte Objekte, wie zum Beispiel Personen, in dem Überwachungsbereich zu verfolgen. Dazu ist es notwendig, die bewegten Objekte, die von einer ersten Überwachungsvorrichtung 2 detektiert wurden, bei einer Detektion durch eine andere Überwachungsvorrichtung 2 wieder zu erkennen. Für die Wiedererkennung wird für jedes detektierte Objekt in jeder Überwachungsvorrichtung 2 eine Objektsignatur erstellt und mit Objektsignaturen von anderen Überwachungsvorrichtungen 2 vergleichen, die über das Netzwerk 3 verteilt werden. Stimmt die aktuelle Objektsignatur und eine Objektsignatur einer anderen Überwachungsvorrichtung 2 überein, so gilt ein Objekt als wiedererkannt. Können keine übereinstimmenden oder korrespondierenden Objektsignaturen gefunden werden, so gilt das Objekt als neu in den Überwachungsbereich eingetreten. Diese Situation kann beispielsweise bei Eingangsbereichen des Überwachungsbereichs eintreten.

Zur Bildung der Objektsignatur werden die Sensordaten der Sensoren 4, insbesondere die Bilder oder Bildersequenzen der Überwachungskameras, in eine Merkmalsextraktionseinrichtung 5 geleitet, welche von einem aktuellen bewegten Objekt Merkmale erfasst. Beispielsweise ist es möglich, dass die Merkmalsextraktionseinheit 5 eine Einrichtung zur Objektdetektion und Verfolgung 6 aufweist, welche - wie eingangs erwähnt - bewegte Objekte zunächst von dem wesentlichen statischen Szenenhintergrund trennt und über die Zeit verfolgt. Ausgehend von diesen detektierten Objekten werden dann optische oder kinetische Merkmale, wie zum Beispiel Farbe, Helligkeit, Textur oder auch Geschwindigkeit oder Beschleunigung extrahiert, wobei jedem dieser Merkmale für das aktuelle Objekt ein Merkmalswert zugeordnet wird. Die Merkmalsextraktionseinrichtung 5 kann jedoch auch weitere Module 7 zur Extraktion von anderen Merkmalen, wie zum Beispiel akustischen Merkmale, etc. enthalten.

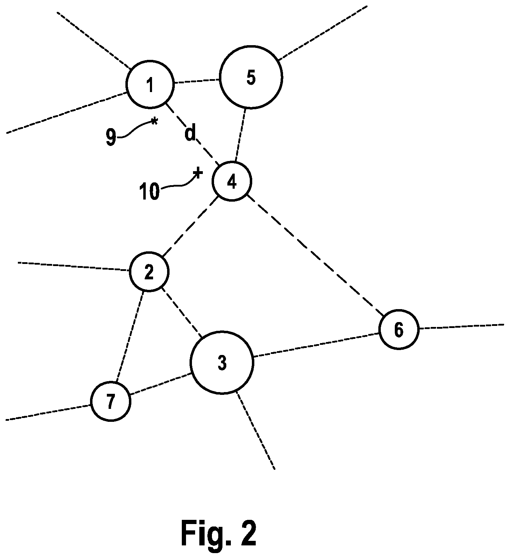

Die Merkmalswerte der Merkmale werden in eine Kodierungseinrichtung 8 übergeben, welche jedem Merkmalswert eines Merkmals ein Identifikationsdatum in Form einer Cluster-ID zuweist. Für die Erläuterung der Cluster-ID wird auf die Figur 2 verwiesen.

Die Figur 2 zeigt in einer schematischen Darstellung ein Cluster-Diagramm, welches einen Merkmalsraum definieren soll. Der Merkmalsraum kann - wie gezeichnet - zweidimensional, jedoch auch drei- oder mehrdimensional ausgeprägt sein. In dem Merkmalsraum werden zum Beispiel über eine Lernphase oder auch während des Betriebs des Überwachungssystems 1 mögliche oder erfasste Merkmalswerte eingetragen und nachfolgend in Clustern 1, 2, ... 7 zusammengefasst. Eine sinnvolle Clusterung kann man z.B. erreichen, indem viele Testdaten aufgenommen werden und mittels dieser Testdaten der Merkmalsraum aufgespannt und geclustert wird. Je mehr Cluster im Merkmalsraum entstehen, desto feinere Unterschiede können von Objekten extrahiert werden, aber auch umso größer werden die Cluster-IDs. Der Merkmalsraum kann auch während der Laufzeit erweitert werden, indem neue Cluster gebildet werden. Je nach dem, wie viele Cluster in einem Merkmalsraum berechnet werden, wird die Größe der Cluster-ID (8-bit, 16-bit oder 32-bit) eines Clusters und somit der Speicher- bzw. Transferbedarf für diesen Merkmalstyp in der Objektsignatur festgelegt.

Ein aktueller Merkmalswert eines aktuellen Objektes 9 wird dem Cluster zugewiesen, der im Merkmalsraum am nächsten ist. Beispielsweise wird der mit einem Stern gekennzeichnete Merkmalswert 9 der Cluster-ID 1 und der mit einem Kreuz gekennzeichnete Merkmalswert 10 der Cluster-ID 4 zugeordnet.

Für die Zuordnung der aktuellen Merkmalswerte zu den Cluster-IDs weist die Überwachungsvorrichtung 2 einen Datenspeicher 11 zur Speicherung des Merkmalsraums sowie der Cluster auf.

Sobald alle Merkmalswerte in Cluster-IDs abgebildet wurden, ist die Objektsignaturgenerierung abgeschlossen. Die Objektsignatur besteht nun weitgehend oder ausschließlich nur aus den Cluster-IDs, welche jeweils als ein Mehr-Bit-Wort ausgebildet sind. Somit verbleibt der Großteil der Informationen in dem Datenspeicher 11 und nur die Referenzen auf die Informationen werden in der Objektsignatur abgelegt. Damit wird eine sehr effiziente und kompakte Beschreibung von Objekten umgesetzt.

Für die Wiedererkennung eines Objektes umfasst die Überwachungsvorrichtung 2 eine Vergleichseinrichtung 12, welche eine Objektsignatur, die über das Netzwerk 3 übermittelt wird, mit der aktuellen Objektsignatur vergleicht. Idealerweise würde es ausreichen, nur die Cluster-IDs der Objektsignaturen miteinander zu vergleichen, um die gleichen oder die selben Objekte zu identifizieren. Diese Vorgehensweise ist in der Regel jedoch fehleranfällig, da die Merkmalswerte variieren bzw. rauschen. Diese Variationen können z.B. durch Posenänderungen und/oder Beleuchtungsänderungen des Objekts entstehen. Als Folge dieser situationsabhängigen, statistischen oder systematischen Fehler werden die Merkmalswerte bei identischen Objekten unterschiedlich ausfallen und mit einer gewissen Wahrscheinlichkeit auch unterschiedlichen Cluster-IDs zugeordnet werden.

Aus diesem Grund wird der Merkmalsraum in der Figur 2 um einen Ähnlichkeitsgraphen erweitert, wobei die Distanz zwischen unterschiedlichen Cluster-IDs in der Form von einer Pfadlänge d oder der Anzahl von Knoten, die in dem Ähnlichkeitsgraphen zurückgelegt werden muss, angegeben wird und ein Maß für die Ähnlichkeit zweier Cluster repräsentiert. Der Ähnlichkeitsgraph wird in dem Datenspeicher 12 oder in einem zentralen Speicher in dem Netzwerk 3 abgelegt. Für den Fall, dass der Merkmalsraum und/oder der Ähnlichkeitsgraph während der Laufzeit geändert wird, werden die Änderungen an die anderen Datenspeicher 12 der anderen Überwachungsvorrichtungen 2 oder an den oder die zentralen Speicher weitergegeben werden.

In der Vergleichseinrichtung 12 erfolgt neben oder anstatt eines Identitätsvergleichs ein Ähnlichkeitsvergleich zwischen zwei Objektsignaturen. Hierbei wird für jedes Merkmal die Ähnlichkeit der Cluster-IDs der zwei Objektsignaturen berechnet. Nachfolgend werden sämtliche Ähnlichkeiten aller Merkmale der Objektsignaturen kumuliert, um eine globale Aussage über die Ähnlichkeit der Objekte zu bekommen. Die Kumulation erfolgt beispielsweise über eine Aufsummierung mit unterschiedlicher Gewichtung der Merkmale. Mit diesem Vorgehen ist eine sehr robuste Wiedererkennung von Objekten möglich. Das Verfahren kann auf beliebige Merkmale angewandt werden, wobei die anschließende Fusion der Ähnlichkeitsaussage für jedes Merkmal eine robuste Wiedererkennung von Objekten erlaubt.

Bei einer Videoüberwachung als Überwachungssystem 1 ist es beispielsweise möglich, dass pro Frame einer Kamera die Merkmalswerte berechnet und dem jeweiligen Cluster zur Ermittlung der Cluster-ID zugewiesen werden. Um die Objektsignatur zu stabilisieren können auch nur die Cluster-IDs verwendet werden, die öfters, also in mehreren Frames, ermittelt werden.

## Patentansprüche

1. Vorrichtung (2) zur Erzeugung und/oder Verarbeitung einer Objektsignatur eines Objekts aus einer Szene, wobei die Objektsignatur zur Beschreibung und/oder Identifikation des Objekts ausgebildet ist,
mit einer Merkmalsextraktionseinrichtung (5), welche ausgebildet ist, aus der Szene mindestens einen Merkmalswert von einem Merkmal des Objekts zu extrahieren,
mit einem Teilraumgenerator, welcher zur Erzeugung eines Merkmalsraums und Clustern mit Cluster-IDs in dem Merkmalsraum für das Merkmal ausgebildet ist, wobei der Merkmalswert des Objekts in dem Merkmalsraum des Merkmals darstellbar ist,
und durch eine Kodierungseinrichtung (8), welche ausgebildet ist, den Merkmalswert in ein Identifikationsdatum zu kodieren, wobei das Identifikationsdatum einen Teil der Objektsignatur bildet,
wobei das Identifikationsdatum als Cluster-ID auf einen der Cluster des Merkmalsraums des Merkmals verweist, wobei der Teilraumgenerator zur Erzeugung eines Ähnlichkeitsmaßes zwischen den Clustern eines einzigen Merkmalraums ausgebildet ist,
wobei das Ähnlichkeitsmaß als ein Ähnlichkeitsgraph ausgebildet ist, wobei die Cluster als Knoten über Strecken verbunden sind, **dadurch gekennzeichnet, dass**
die Vorrichtung (2) eine Vergleichseinrichtung (12) umfasst, welche zu einem Vergleich zwischen einer ersten Objektsignatur mit ersten Identifikationsdaten und einer zweiten Objektsignatur mit zweiten Identifikationsdaten auf Basis des Ähnlichkeitsmaßes ausgebildet ist, wobei die Ähnlichkeit zwischen zwei Clustern durch die Anzahl der Zwischenknoten auf dem kürzesten Weg festgelegt festgelegt ist.

2. Vorrichtung (2) nach Anspruch 1, **dadurch gekennzeichnet, dass** die Identifikationsdaten jeweils als ein Mehrbitwort ausgebildet ist und/oder mindestens ein Cluster mehrere Merkmalswerte umfasst und/oder mehrere Cluster eines Merkmalsraums eine unterschiedliche Anzahl von Merkmalswerten umfassen.

3. Vorrichtung (2) nach Anspruch 1 oder 2, **dadurch gekennzeichnet, dass** die Objektsignatur mehrere Identifikationsdaten umfasst, die verschiedenen Merkmalen zugeordnet sind.

4. Vorrichtung (2) nach einem der vorhergehenden Ansprüche, **dadurch gekennzeichnet, dass** der Teilraumgenerator zur Aufspannung und/oder Aktualisierung des Merkmalsraums und/oder der Cluster des Merkmalsraum auf Basis von Testdaten und/oder von Echtzeitdaten ausgebildet ist.

5. Überwachungsvorrichtung (1) mit einer Mehrzahl von Überwachungssensoren (4), insbesondere Kameras, welche zur Überwachung eines Überwachungsbereichs in einem Netzwerk (3) angeordnet und/oder anordbar sind, **gekennzeichnet durch** eine Vorrichtung (2) nach einem der vorhergehenden Ansprüche, wobei die Objektsignaturen über das Netzwerk (3) übertragen werden und/oder übertragbar sind

6. Verfahren zur Erzeugung und/oder Verarbeitung einer Objektsignatur eines Objekts aus einer Szene, wobei die Objektsignatur zur Beschreibung und/oder Identifikation des Objekts ausgebildet ist, wobei aus der Szene mindestens ein Merkmalswert von einem Merkmal des Objekts extrahiert wird, wobei ein Merkmalsraum und Cluster mit Cluster-IDs in dem Merkmalsraum für das Merkmal erzeugt wird, wobei der Merkmalswert aus dem Merkmalsraum des Merkmals entnommen ist, wobei das Merkmal in ein Identifikationsdatum kodiert ist, wobei das Identifikationsdatum einen Teil der Objektsignatur bildet, wobei das Identifikationsdatum als Cluster-ID auf einen der Cluster des Merkmalsraums des Merkmals verweist, wobei ein Ähnlichkeitsmaß zwischen den Clustern eines einzigen Merkmalraums erzeugt wird, wobei das Ähnlichkeitsmaß als ein Ähnlichkeitsgraph ausgebildet ist, wobei die Cluster als Knoten über Strecken verbunden sind,
**dadurch gekennzeichnet, dass**
ein Vergleich zwischen einer ersten Objektsignatur mit ersten Identifikationsdaten und einer zweiten Objektsignatur mit zweiten Identifikationsdaten auf Basis des Ähnlichkeitsmaßes durchgeführt wird, wobei die Ähnlichkeit zwischen zwei Clustern durch die Anzahl der Zwischenknoten auf dem kürzesten Weg festgelegt ist.

7. Computerprogramm mit Programm-Code Mitteln, um alle Schritte des Verfahrens nach Anspruch 6 durchzuführen, wenn das Programm auf einem Computer und/oder einer Vorrichtung (2) und/oder Überwachungsvorrichtung (1) nach einem der vorhergehenden Ansprüche ausgeführt wird.

## Claims

1. Apparatus (2) for generating and/or processing an object signature of an object from a scene, wherein the object signature is designed to describe and/or identify the object,
having a feature extraction device (5) which is designed to extract at least one feature value of a feature of the object from the scene,
having a subspace generator which is designed to generate a feature space and clusters having cluster IDs in the feature space for the feature, wherein the feature value of the object can be presented in the feature space of the feature,
and having a coding device (8) which is designed to code the feature value into an identification data item, wherein the identification data item forms part of the object signature,
wherein the identification data item as a cluster ID refers to one of the clusters in the feature space of the feature,
wherein the subspace generator is designed to generate a degree of similarity between the clusters in a single feature space,
wherein the degree of similarity is in the form of a similarity graph, wherein the clusters as nodes are connected via paths,
**characterized in that**
the apparatus (2) comprises a comparison device (12) which is designed to compare a first object signature with first identification data and to compare a second object signature with second identification data on the basis of the degree of similarity,
wherein the similarity between two clusters is determined by the number of intermediate nodes on the shortest route.

2. Apparatus (2) according to Claim 1, **characterized in that** the identification data are each in the form of a multibit word and/or at least one cluster comprises a plurality of feature values and/or a plurality of clusters in a feature space comprise a different number of feature values.

3. Apparatus (2) according to Claim 1 or 2, **characterized in that** the object signature comprises a plurality of identification data items assigned to different features.

4. Apparatus (2) according to one of the preceding claims, **characterized in that** the subspace generator is designed to span and/or update the feature space and/or the clusters in the feature space on the basis of test data and/or real-time data.

5. Monitoring apparatus (1) having a plurality of monitoring sensors (4), in particular cameras, which are arranged and/or can be arranged for the purpose of monitoring a monitoring area in a network (3), **characterized by** an apparatus (2) according to one of the preceding claims, wherein the object signatures are transmitted and/or can be transmitted via the network (3).

6. Method for generating and/or processing an object signature of an object from a scene, wherein the object signature is designed to describe and/or identify the object, wherein at least one feature value of a feature of the object is extracted from the scene, wherein a feature space and clusters having cluster IDs in the feature space are generated for the feature, wherein the feature value is taken from the feature space of the feature, wherein the feature is coded into an identification data item, wherein the identification data item forms part of the object signature, wherein the identification data item as a cluster ID refers to one of the clusters in the feature space of the feature, wherein a degree of similarity between the clusters in a single feature space is generated, wherein the degree of similarity is in the form of a similarity graph, wherein the clusters as nodes are connected via paths,
**characterized in that**
a first object signature is compared with first identification data and a second object signature is compared with second identification data on the basis of the degree of similarity, wherein the similarity between two clusters is determined by the number of intermediate nodes on the shortest route.

7. Computer program having program code means for carrying out all steps of the method according to Claim 6 when the program is executed on a computer and/or an apparatus (2) and/or a monitoring apparatus (1) according to one of the preceding claims.

## Revendications

1. Arrangement (2) pour générer et/ou traiter une signature d'objet d'un objet issu d'une scène, la signature d'objet étant configurée pour décrire et/ou identifier l'objet,
comprenant un dispositif d'extraction de caractéristique (5) qui est configuré pour extraire au moins une valeur de caractéristique d'une caractéristique de l'objet à partir de la scène, comprenant un générateur d'espace partiel qui est configuré pour générer un espace de caractéristique et des grappes munies d'ID de grappe dans l'espace de caractéristique pour la caractéristique, la valeur de caractéristique de l'objet pouvant être représentée dans l'espace de caractéristique pour la caractéristique,
et un dispositif de codage (8) qui est configuré pour coder la valeur de caractéristique dans une date d'identification, la date d'identification formant une partie de la signature d'objet,
la date d'identification, en tant qu'ID de grappe, renvoyant sur une grappe de l'espace de caractéristique de la caractéristique,
le générateur d'espace partiel étant configuré pour générer une mesure de similarité entre les grappes d'un espace de caractéristique unique,
la mesure de similarité étant réalisée sous la forme d'un graphe de similarité, les grappes en tant que noeuds étant reliées par des tronçons,
**caractérisé en ce que**
l'arrangement (2) comporte un dispositif de comparaison (12) qui est configuré pour une comparaison entre une première signature d'objet ayant des premières données d'identification et une deuxième signature d'objet ayant des deuxièmes données d'identification sur la base de la mesure de similarité,
la similarité entre deux grappes étant fixée par le nombre de noeuds intermédiaires sur le trajet le plus court.

2. Arrangement (2) selon la revendication 1, **caractérisé en ce que** les données d'identification sont respectivement réalisées sous la forme d'un mot à plusieurs bits et/ou au moins une grappe comporte plusieurs valeurs de caractéristique et/ou plusieurs grappes d'un espace de caractéristique comportent un nombre différent de valeurs de caractéristique.

3. Arrangement (2) selon la revendication 1 ou 2, **caractérisé en ce que** la signature d'objet comporte plusieurs données d'identification qui sont associées à des caractéristiques différentes.

4. Arrangement (2) selon l'une des revendications précédentes, **caractérisé en ce que** le générateur d'espace partiel est configuré pour fixer et/ou actualiser l'espace de caractéristique et/ou les grappes de l'espace de caractéristique en se basant sur des données de test et/ou des données en temps réel.

5. Arrangement de surveillance (1) comprenant une pluralité de capteurs de surveillance (4), notamment des caméras, qui sont disposées et/ou peuvent être disposées pour surveiller une zone de surveillance dans un réseau (3), **caractérisé par** un arrangement (2) selon l'une des revendications précédentes, les signatures d'objet étant transmises et/ou pouvant être transmises par le biais du réseau (3).

6. Procédé pour générer et/ou traiter une signature d'objet d'un objet issu d'une scène, la signature d'objet étant configurée pour décrire et/ou identifier l'objet, au moins une valeur de caractéristique d'une caractéristique de l'objet étant extraite à partir de la scène, un espace de caractéristique et des grappes munies d'ID de grappe dans l'espace de caractéristique étant générés pour la caractéristique, la valeur de caractéristique étant prélevée de l'espace de caractéristique de la caractéristique, la valeur de caractéristique étant codée dans une date d'identification, la date d'identification formant une partie de la signature d'objet, la date d'identification, en tant qu'ID de grappe, renvoyant sur une grappe de l'espace de caractéristique de la caractéristique, une mesure de similarité entre les grappes d'un espace de caractéristique unique étant générée, la mesure de similarité étant réalisée sous la forme d'un graphe de similarité, les grappes en tant que noeuds étant reliées par des tronçons,
**caractérisé en ce que**
une comparaison est effectuée entre une première signature d'objet ayant des premières données d'identification et une deuxième signature d'objet ayant des deuxièmes données d'identification sur la base de la mesure de similarité, la similarité entre deux grappes étant fixée par le nombre de noeuds intermédiaires sur le trajet le plus court.

7. Programme informatique comprenant des moyens de code de programme pour mettre en oeuvre toutes les étapes du procédé selon la revendication 6 lorsque le programme est exécuté sur un ordinateur et/ou un arrangement (2) et/ou un arrangement de surveillance (1) selon l'une des revendications précédentes.
